**Europäisches Patentamt**

**European Patent Office**

**Office européen des brevets**

(19)

(11) Veröffentlichungsnummer: **0 047 729**
**B1**

(12) # EUROPÄISCHE PATENTSCHRIFT

(45) Veröffentlichungstag der Patentschrift:
17.04.85

(51) Int. Cl.⁴: **F 16 D 7/02, F 16 D 25/04**

(21) Anmeldenummer: **81890137.3**

(22) Anmeldetag: **07.08.81**

(54) **Rutschkupplung.**

(30) Priorität: **10.09.80 AT 4540/80**

(43) Veröffentlichungstag der Anmeldung:
**17.03.82 Patentblatt 82/11**

(45) Bekanntmachung des Hinweises auf die Patenterteilung:
**17.04.85 Patentblatt 85/16**

(84) Benannte Vertragsstaaten:
**DE FR GB IT NL**

(56) Entgegenhaltungen:
**WO - A - 80/01193**
**DE - A - 1 938 965**
**DE - B - 1 286 824**
**FR - A - 1 232 080**
**FR - A - 2 237 729**
**GB - A - 1 203 629**
**US - A - 2 720 735**
**US - A - 3 473 640**
**US - A - 3 937 412**

(73) Patentinhaber: **VOEST-ALPINE Aktiengesellschaft,
Werksgelände, A-4010 Linz (AT)**

(72) Erfinder: **Schwenzfeier, Werner, Prof. Dr. Ing.,
Anzengrubergasse 1, A-8700 Leoben (AT)**
Erfinder: **Kawa, Franz, Dipl.-Ing., Gösserstrasse 15/21,
A-8700 Leoben (AT)**

(74) Vertreter: **Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz (AT)**

## Beschreibung

Die Erfindung bezieht sich auf eine Rutschkupplung mit einer zwischen einer Welle und einer Nabe angeordneten, dehnbaren Kupplungshülse, die mehrere, mittels eines Druckmittels mit gleichem Druck beaufschlagbare Abschnitte aufweist.

Bei bekannten Rutschkupplungen besteht die Kupplungshülse aus einem zwischen einer Welle und einer Nabe angeordneten, endlosen Schlauch, der sich bei einer Beaufschlagung mit einem Druckmittel an die Welle und an die Nabe anlegt, so daß das über den Schlauch übertragbare Drehmoment bei konstanten Reibungskoeffizienten vom Beaufschlagungsdruck des Schlauches abhängt und damit über eine Änderung des Beaufschlagungsdruckes einstellbar ist. Nachteilig ist allerdings bei solchen Rutschkupplungen, daß das Drehmoment von der Schlauchwand übertragen werden muß, und zwar von den stirnseitigen Wandteilen, die die den Mantel der Kupplungshülse bildenden Wandabschnitte verbinden und im wesentlichen radial zur Welle verlaufen. Dadurch wird nicht nur das übertragbare Drehmoment nach oben begrenzt, sondern auch eine gleichmäßige Flächenpressung zwischen dem Schlauch einerseits und der Welle bzw. der Nabe anderseits gestört, weil die radialen Wandabschnitte des Schlauches die Verformung der in Umfangsrichtung der Welle verlaufenden Wandabschnitte in ihrem Bereich behindern, so daß in den stirnseitigen Bereich der Kupplungshülse mit einer geringeren Flächenpressung zwischen Schlauch und Welle bzw. Nabe gerechnet werden muß.

Wird als Kupplungshülse nicht ein endloser Schlauch, sondern ein in eine schraubenlinienförmig verlaufende Nut der Welle eingelegter Schlauch verwendet, der die Welle in mehreren Windungen umschließt (US-A-3 473 640), so kann für eine Vergrößerung des übertragbaren Drehmomentes kaum etwas gewonnen werden, weil sich wegen der Dehnbarkeit des Schlauches zwangsläufig auch eine Dehnung in Umfangsrichtung ergibt, was zu einer ungleichmäßigen Belastung der einzelnen Schlauchwindungen führt. Dieser Umstand bedingt, daß gewisse Schlauchabschnitte hinsichtlich ihrer zulässigen Belastbarkeit zu gering belastet werden müssen, um eine Überlastung von anderen Schlauchteilen zu vermeiden. Das übertragbare Drehmoment bleibt daher zwangsläufig begrenzt, auch wenn der Schlauch durch in Umfangsrichtung verlaufende Zwischenwände in mehrere Kammern unterteilt wird. Diese voneinander abgeschlossenen Kammern bringen sogar die Gefahr mit sich, daß in den Kammern kein gleichmäßiger Druckauf- bzw. -abbau sichergestellt werden kann, so daß es zu unterschiedlichen Schubbelastungen im Bereich der Zwischenwände kommt und diese bei höheren Beaufschlagungsdrücken beschädigt werden können.

Schließlich ist es bekannt (FR-A-1 232 080), die Kupplungshülse aus zwei gesonderten, axial nebeneinandergereihten, endlosen Schläuchen zusammenzusetzen, was eine Erhöhung des übertragbaren Drehmomentes erlaubt. Allerdings bleibt der jedem Schlauch eigene Nachteil einer ungleichmäßigen Flächenpressung über seine axiale Erstreckung bestehen, so daß das hinsichtlich der gegebenen Anpreßfläche bei einem zulässigen, maximalen Anpreßdruck mögliche übertragbare Drehmoment nicht ausgenützt werden kann. Abgesehen davon wird durch das Vorsehen von zwei Schläuchen der Aufwand erheblich vergrößert, zumal für eine gleichmäßige Beaufschlagung beider Schläuche Sorge getragen werden muß.

Der Erfindung liegt somit die Aufgabe zugrunde, diese Mängel zu vermeiden und eine Rutschkupplung der eingangs geschilderten Art so zu verbessern, daß mit einem geringen Aufwand unter weitgehender Ausnützung der zulässigen Maximalbeanspruchungen auch hohe Drehmomente übertragen werden können.

Die Erfindung löst die gestellte Aufgabe dadurch, daß die Kupplungshülse aus einem Schlauch besteht, dessen den Mantel der Kupplungshülse bildende Abschnitte der Schlauchwand durch in Umfangsrichtung verlaufende Zwischenwände verbunden sind, und daß die Zwischenwände Durchtrittsöffnungen für das Druckmittel aufweisen.

Durch das Vorsehen von Zwischenwänden wird das zu übertragende Drehmoment nicht nur über die die Stirnfläche der Kupplungshülse bildenden Abschnitte der Schlauchwand, sondern auch über die Zwischenwände übertragen, so daß die Belastung der einzelnen Wände bzw. Wandabschnitte entsprechend verringert und damit eine Vergrößerung des übertragbaren Drehmomentes erreicht wird. Die die Schlauchwandabschnitte in Umfangsrichtung verbindenden Zwischenwände verhindern außerdem ein stärkeres Auswölben des Schlauches im Mittelbereich, was eine gleichmäßigere Verformung des Schlauches und davon abhängig einen gleichmäßigeren Verlauf der Flächenpressung zwischen dem Schlauch einerseits und der Welle bzw. der Nabe anderseits zur Folge hat. Diese Vergleichmäßigung der Flächenpressung schaltet den Einfluß der Schlauchverformung weitgehend aus, so daß das Rutschmoment bei entsprechend konstanten Reibungskoeffizienten nur vom Beaufschlagungsdruck des Schlauches abhängt.

Der zur Übertragung höherer Drehmomente erforderliche größere Beaufschlagungsdruck gefährdet jedoch die Zwischenwände nicht, weil durch die Durchtrittsöffnungen in den Zwischenwänden ein Druckausgleich stattfindet, der gefährliche Schubspannungen in den Zwischenwänden zufolge unterschiedlicher Drücke in den einzelnen Schlauchabschnitten ausschließt. Die Schubfestigkeit der Zwischenwände wird durch die Durchtrittsöffnungen für das Druckmittel kaum verringert, weil sie sehr klein gehalten werden können.

Um in Sonderfällen den Einfluß der Durchtrittsöffnungen auf den tragenden Querschnitt der Kupplungshülse auf ein Minimum herabzusetzen, können die Durchtrittsöffnungen in den einzelnen Zwischenwänden gegeneinander versetzt sein, so daß sich die Durchtrittsöffnungen über den Umfang der Kupplungshülse verteilen.

Verlaufen die Zwischenwände bezüglich eines Schnittes durch die Wellenachse zum Wellenradius geneigt, so brauchen die Zwischenwände nicht gedehnt zu werden, um ein Anliegen des Schlauches an der Nabe bzw. an der Welle zu ermöglichen. Es können somit auch größere Radialwege bei gleichem Beaufschlagungsdruck erreicht werden.

Besonders einfache Konstruktionsverhältnisse ergeben sich, wenn die Kupplungshülse aus einzelnen, miteinander vorzugsweise durch eine Elektronenstrahlschweißung verbundenen, I-förmigen Profilstreifen zusammengesetzt ist, von denen die stirnseitigen mit zwei Abschlußprofilen verschweißt sind. Diese Abschlußprofile können die Aufgabe von Stützringen übernehmen, was die Ausbildung einer gleichmäßigen Flächenpressung über die axiale Erstreckung der Kupplungshülse unterstützt.

In der Zeichnung ist der Erfindungsgegenstand beispielsweise dargestellt. Es zeigt

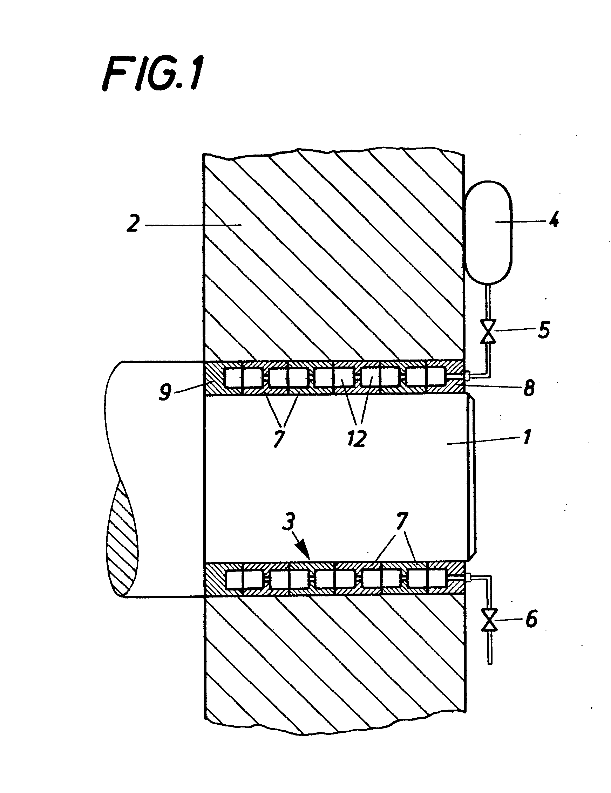

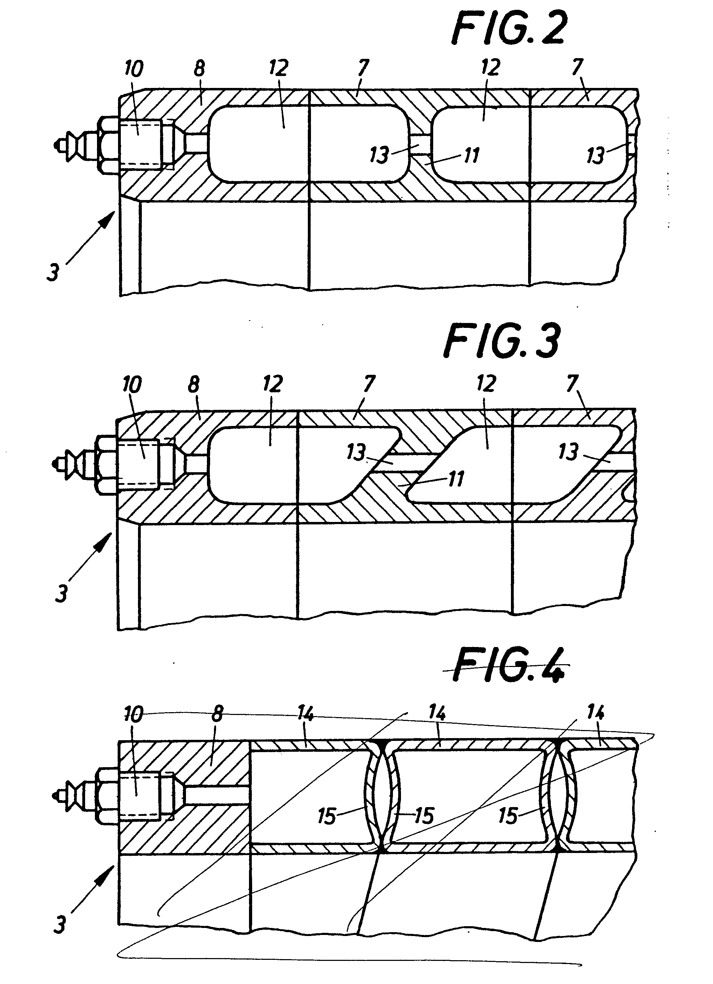

Fig. 1 eine erfindungsgemäße Rutschkupplung im schematischen Axialschnitt, und die Fig. 2 und 3 verschiedene Ausführungsformen einer Kupplungshülse, jeweils im Axialschnitt.

Wie der Fig. 1 entnommen werden kann, besteht die Rutschkupplung im wesentlichen aus einer Welle 1, einer Nabe 2 und einer zwischen der Welle 1 und der Nabe 2 angeordneten Kupplungshülse 3, die von einer Druckmittelquelle 4 über ein Ventil 5 beaufschlagt werden kann, um eine Reibungsverbindung zwischen der Welle 1 und der Kupplungshülse 3 einerseits und der Kupplungshülse 3 und der Nabe 2 andererseits herzustellen. Zum Lösen der Rutschkupplung ist die Kupplungshülse 3 nur über ein Auslaßventil 6 zu entlasten.

Die Kupplungshülse 3 wird gemäß den Ausführungsbeispielen aus einem Schlauch gebildet, der aus einzelnen I-förmigen Profilstreifen 7 zusammengesetzt ist, die miteinander vorzugsweise durch eine Elektronenstrahlschweißung verbunden sind. An den Stirnseiten der so miteinander verbundenen Profilstreifen 7 sind zwei Abschlußprofile 8 und 9 angeschweißt, die die Aufgabe von ein axiales Ausdehnen der Kupplungshülse 3 verhindernden Stützringen übernehmen können. Die Verbindung zu den Druckmittelleitungen erfolgt dabei über Anschlußnippel 10 in den Abschlußprofilen 8.

Da die Stege der I-förmigen Profilstreifen 7 Zwischenwände 11 bilden, die die den Mantel der Kupplungshülse 3 bildenden Abschnitte der Schlauchwand miteinander zusätzlich verbinden, wird auch ein Teil der zwischen der Welle 1 und der Nabe 2 auftretenden Umfangskräfte über diese Zwischenwände 11 von der Nabe auf die Welle bzw. von der Welle auf die Nabe übertragen, was die Übertragung hoher Drehmomente erlaubt. Die durch die tragenden Zwischenwände 11 gebildeten Ringkammern 12 sind über Durchtrittsöffnungen 13 miteinander verbunden, so daß zwischen den Ringkammern 12 ein Druckausgleich stattfindet, der unzulässig hohe Schubbeanspruchungen der Zwischenwände 11 ausschließt. Um die Schwächung der Kupplungshülse 3 im Bereich der Durchtrittsöffnungen 13 möglichst zu vermeiden, können die Durchtrittsöffnungen 13 entgegen der Darstellung in der Zeichnung gegeneinander in Umfangsrichtung versetzt angeordnet werden.

Wie das Ausführungsbeispiel nach Fig. 3 zeigt, können die Zwischenwände 11 der Kupplungshülse 3 bezüglich eines Radius der Welle 1 geneigt verlaufen. Dadurch wird die radiale Ausweitung der Kupplungshülse erleichtert, da die Zwischenwände 11 nicht gedehnt werden müssen.

Durch den Aufbau der Kupplungshülse aus einzelnen Profilstreifen wird nicht nur in einfacher Weise die Herstellung der Zwischenwände ermöglicht, sondern auch gewährleistet, daß die Kupplungshülse in einer gewünschten Länge durch ein entsprechendes Zusammensetzen der Profilstreifen gefertigt werden kann. Die Verbindung der den Mantel der Kupplungshülse bildenden Schlauchwände durch Zwischenwände stellt darüber hinaus eine gleichmäßige Flächenpressung zwischen der Welle 1 und der Kupplungshülse 3 einerseits und zwischen der Kupplungshülse 3 und der Nabe 2 andererseits sicher. Die Kupplungshülse 3 kann dabei entweder mit der Welle 1 oder mit der Nabe 2 verbunden werden, wobei die Druckmittelquelle 4 vorteilhaft an jenem Konstruktionsteil angebracht wird, dem auch die Kupplungshülse zugeordnet ist.

## Patentansprüche

1. Rutschkupplung mit einer zwischen einer Welle (1) und einer Nabe (2) angeordneten, dehnbaren Kupplungshülse (3), die mehrere, mittels eines Druckmittels mit gleichem Druck beaufschlagbare Abschnitte aufweist, dadurch gekennzeichnet, daß die Kupplungshülse (3) aus einem Schlauch besteht, dessen den Mantel der Kupplungshülse (3) bildende Abschnitt der Schlauchwand durch in Umfangsrichtung verlaufende Zwischenwände (11) verbunden sind, und daß die Zwischenwände (11) Durchtrittsöffnungen (13) für das Druckmittel aufweisen.

2. Rutschkupplung nach Anspruch 1, dadurch gekennzeichnet, daß die Durchtrittsöffnungen (13) in den einzelnen Zwischenwänden (11) gegeneinander versetzt sind.

3. Rutschkupplung nach Anspruch 1 oder 2, dadurch gekennzeichnet, daß die Zwischenwände (11) bezüglich eines Schnittes durch die Wellenachse zum Wellenradius geneigt verlaufen.

4. Rutschkupplung nach einem der Ansprüche 1 bis 3, dadurch gekennzeichnet, daß die Kupplungshülse (3) aus einzelnen, miteinander vorzugsweise durch eine Elektronenstrahlschweißung verbundenen, I-förmigen Profilstreifen (7) zusammengesetzt ist, von denen die stirnseitigen mit zwei Abschlußprofilen (8, 9) verschweißt sind.

## Claims

1. A friction coupling comprising an expansible coupling sleeve (3), which is disposed between a shaft (1) and a hub (2) and has a plurality of sections which are adapted to be subjected to the same pressure by a fluid, characterized in that the coupling sleeve (3) consists of a hose, which includes wall sections that constitute the shell of the coupling sleeve (3) and are interconnected by peripherally extending partitions (11), which are formed with through openings (13) for the fluid.

2. A friction coupling according to claim 1, characterized in that the through openings (13) in several partitions (11) are offset from each other.

3. A friction coupling according to claim 1 or 2, characterized in that in a section plane containing the axis of the shaft the partitions (11) are inclined with respect to the radius of the shaft.

4. A friction coupling according to any of claims 1 to 3, characterized in that the coupling sleeve (3) is composed of a plurality of discrete I-section strips (7), which are interconnected preferably by electron beam welding, and those of said strips which are disposed at the ends of the sleeve are joined by welding two end sections (8, 9).

## Revendications

1. Accouplement à glissement comportant une douille d'accouplement extensible (3) disposée entre un arbre (1) et un moyeu (2) et qui présente plusieurs parties pouvant être soumises à la même pression au moyen d'un agent de pression, caractérisé par le fait que la douille d'accouplement (3) est formée d'un tuyau souple dont des parties de paroi de tuyau souple, formant la paroi latérale de la douille d'accouplement, (3) sont reliées par des parois intermédiaires (11) situées en direction longitudinale et que les parois intermédiaires (11) présentent des ouvertures de passage (13) pour l'agent de pression.

2. Accouplement à glissement selon la revendication 1, caractérisé par le fait que les ouvertures de passage (13) sont décalées entre elles dans les différentes parois intermédiaires (11).

3. Accouplement à glissement selon l'une des revendications 1 et 2, caractérisé par le fait que les parois intermédiaire (11) ont une allure inclinée par rapport au rayon de l'arbre, en ce qui concerne une coupe par l'axe de l'arbre.

4. Accouplement à glissement selon l'une des des revendications 1 à 3, caractérisé par le fait que la douille d'accouplement (3) est formée de différentes bandes (7) profilées en I reliées entre elles, de préférence par un soudage réalisé par bombardement électronique, celles du côté frontal étant soudées à deux profilés (8, 9) de fermeture.

# FIG.1

# FIG. 2

# FIG. 3

# FIG. 4